# EUROPEAN PATENT SPECIFICATION

(11) **EP 2 881 664 B1**
(45) Date of publication and mention of the grant of the patent: **22.01.2020**
(21) Application number: 14174948.1
(22) Date of filing: 30.06.2014
(51) Int. Cl.: F23J 11/12, F23J 13/02, F23J 13/08, F23J 15/02, F23L 17/00, F23L 17/04, B01D 46/02

(54) **Smoke purification device**
Rauchreinigungsvorrichtung
Dispositif de purification de fumée

(30) Priority: 06.12.2013 DK 201300192 U
(43) Date of publication of application: 10.06.2015
(73) Proprietor: Proces Sander ApS, 4623 Lille Skensved (DK)
(72) Inventor: Holm, Tonny Sander, 4623 Lille Skensved (DK)
(74) Representative: AWA Denmark A/S

(56) References cited:
- EP-A1- 2 469 166
- WO-A1-2009/013005
- DE-A1- 19 824 204
- US-A- 5 288 299

## Description

The present invention relates to a smoke purification device, the device being for use in connection with wood burners, wood burning stoves, open fireplaces, furnaces, stoves or heaths for burning wood, smaller furnaces or boilers for biomass fuel or wood pellets and like furnace systems.

As used in the below as well as in the claims, the word "furnace" is intended to refer to the combustion chamber of any of the various above-mentioned furnace systems in connection with which the smoke purification device according to the invention is mounted and used.

Likewise as used herein, including in the claims, the word "furnace system" is intended to refer to such a furnace and the associated outflow pipe or chimney in combination.

The smoke purification device according to the invention may also be used in connection with furnace systems burning oil, coal or coke and in connection with preheating of the combustion air.

Presently, the legislative requirements related to the allowable quantitative emission of particles from domestic furnaces and in particular wood burners and open fireplaces are becoming increasingly tight.

EP 2 463 581 A1 describes a smoke purification device for use with a wood burner and comprising a filtering device arranged in a degassing line of a degassing system. The filtering device comprises a filter element arranged in a housing and being rotatable about an axis of rotation. The filter device further comprises a cleaning unit for removing particles from the filter element.

EP 2 469 166 A1 describes a building with at least one heating system and at least one ventilation system, and with a tubing system comprising a first rising tube for flue gas removal of a heating system of the building, a second rising tube for air supply to the heating system, and a third rising tube for ventilation air removal from the building.

DE 198 24 204 A1 describes a domestic furnace system with a combustion chamber and an outflow pipe for leading away exhaust gases. The outflow pipe comprises means for smoke purification in the form of a catalysis element, upstream of which as seen in the direction of the flow of exhaust gases is provided a difference pressure sensor, means for introducing a reducing agent to the catalysis element, means for blowing pressurized air into the catalysis element and means for heating the exhaust gases. Downstream of the catalysis element is provided a suction blower for drawing air thorugh the catalysis element such as to compensate a pressure loss over the catalysis element.

This smoke purification device is, however, incapable of meeting the present legislative requirements regarding particle emissions.

Therefore, there is a demand and desire for providing an alternative smoke purification device, which furthermore meet the new tighter legislative requirements.

Thus, the object of the invention is to provide such a smoke purification device. A further object of the invention is to provide a smoke purification device and associated mechanical improvements for protection against the unpleasant particles, which are today emitted to our surroundings, and which cause respiratory diseases including lung cancer and other lung diseases.

These and other objects are solved by means of a smoke purification device comprising the features of claim 1.

Particularly, the distinctive part of the invention is a construction in which the combustion air is taken directly from the exterior or surroundings, is preheated by the outgoing combustion air and is lead through a filter bag before being emitted to the surroundings. Consequently, the exit gases will be cleaned for a vast majority of the particles present therein, particularly > 90%, depending on the size of the pores or masks of the filter bag used, and therefore with considerably higher efficiency compared to prior art solutions.

Furthermore, the smoke purification device according to the invention provides for preheating of the combustion air as it is lead along the exit gas chamber on its way through the outer air chamber to the furnace of the furnace system. This ensures that the exergy of the combustion gas is increased which in turn ensures a more complete combustion and thus a lower particle content of the exit gases.

Thereby, the smoke purification device according to the invention is capable of meeting present and likely also future legislative requirements regarding particle emissions.

Unpleasant particles and gases may thus be removed from the exit gases thus contributing to the removal of smog and like air pollution from our breathing air for the benefit of our respiratory system.

Furthermore, with the provision of a construction for cleaning the exit gas cleaning bag, a housing, an access device and a door or hatch, safe disposal is ensured in that the ashes and particles from the filter bag may, after shaking the filter cage or unit with the filter bag, be removed by means of a closed system corresponding to a vacuum cleaner like system for removing ashes.

Further advantageous embodiments appear from the dependent claims.

The provision of a ventilator or blower for regulating the amount of combustion air has the advantage of adding to the completeness of the combustion as it is ensured that sufficient amounts of combustion air is always present.

The provision of a unit according to claim 3 has the advantage of ensuring that no particles are emitted to the surroundings during cleaning or emptying of the smoke purification device.

The provision of the features according to claims 7 and/or 8 has the advantage of providing a security system, which may be activated in case of an excessive pressure in the exit gas cleaning bag. Such a situation may e.g. occur in case of a power failure which may render the valve and/or air bleeding device inoperable.

The provision of the features according to claims 10 and/or 11 has the advantage of providing a device which is insensitive to temperature changes, which may otherwise lower the life time of the smoke purification device.

Furthermore, the invention may be used together with a device for removal of dioxins and other unpleasant gases according to claim 12 for further purification of the exit gases. Such a device may be provided in the form of lime or activated carbon.

Finally, the provision of one or both the features according to claim 13 has the advantage of providing a device which is particularly simple and robust in construction.

The invention will be described in more detail below by means of a non-limiting example of a presently preferred embodiment and with reference to the schematic drawings, in which:
Fig. 1 shows a cross sectional view of a first embodiment of a smoke purification device mounted on an existing or new furnace of the wood burner type,
Fig 2 shows a cross sectional view along the line A-A shown in Fig. 4 of the smoke purification device according to Fig. 1,
Fig. 3 shows a cross sectional view along the line B-B shown in Fig. 4 of the smoke purification device according to Fig. 1,
Fig. 4 shows a cross sectional view of a second embodiment of a smoke purification device mounted on an existing or new furnace of the open fireplace type,
Fig. 5 shows a cross sectional view along the line D-D shown in Fig. 9 of the smoke purification device according to Fig. 4,
Fig. 6 shows a cross sectional view along the line C-C shown in Fig. 9 of the smoke purification device according to Fig. 4,
Fig. 7 shows a cross sectional view along the line A-A of the smoke purification device according to Fig. 4,
Fig. 8 shows a cross sectional view along the line B-B of the smoke purification device according to Fig. 4, and
Fig. 9 shows a top view of the smoke purification device according to Fig. 4.

Irrespective of the embodiment the features of the smoke purification device according to the invention is constructed or made in materials, which fulfil the temperature related requirements in connection with a furnace of the relevant type. The outer piping A may, however, be made in any suitable material. The height of the smoke purification device will typically be between 4 and 6 meters, but may be made higher or lower according to need.

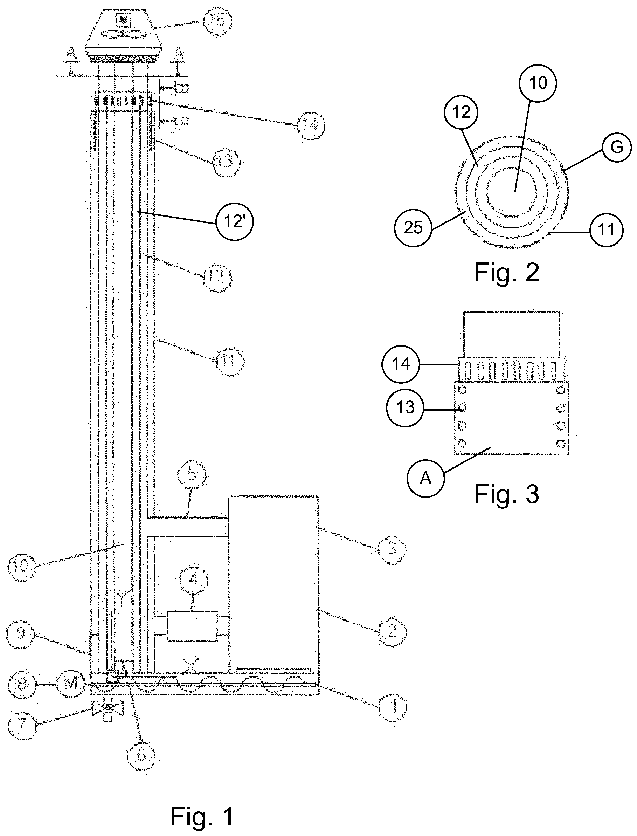

Turning now to Figs. 1 to 3, a first embodiment of a smoke purification device mounted on an existing or new furnace system comprising a furnace 2 and an associated outflow pipe or chimney for leading exit gases away from the furnace 2 to the surroundings is illustrated. In this embodiment, the furnace system is of the wood burner type.

Generally, and irrespective of the embodiment, a smoke purification device G according to the invention comprises the following:
A housing 1 for collecting or accommodating residual or waste products resulting from the burning of fuels, particularly wood, in the furnace 2. The housing 1 comprising a unit for removing the residual products from the furnace 2 to an air bleeding device 7, such as a valve or a connector, arranged at an end of the housing 1 opposite to the furnace.

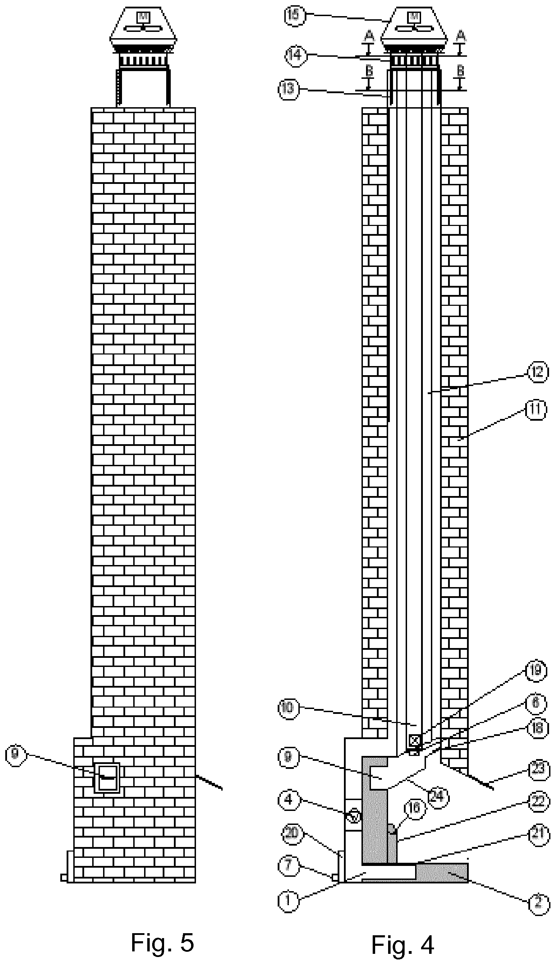

A ventilator or blower 4 mounted at or on the housing 1 for providing the combustion air to the furnace 2. In the embodiment shown on Figs. 1 to 3, the ventilator or blower 4 provides both the primary and the secondary combustion air. In other embodiments, such as that shown in Figs. 4 to 9, the ventilator or blower 4 may provide only one of the primary and the secondary combustion air.

An exit gas chamber generally denoted 12, which in this embodiment comprises a secondary chamber 12' and thus two chambers in total, for the exit gases and an exit gas cleaning bag 10, such as a filter bag, arranged in a filter basket, filter net or the like in the exit gas chamber 12 such as to filter and thereby clean the exit gases.

The secondary chamber 12', and thus the two chambers in total of the exit gas chamber 12, is provided as furnace systems of the wood burner type are gas tight constructions with a low internal oxygen content. In this case the exit gases are therefore introduced in a transverse direction into the exit gas chamber such that the exit gases and particles are forced downwards towards the construction 6 at the bottom of the exit gas cleaning bag 10 before rising towards the the top of the exit gas cleaning bag 10. Thereby the whole length of the exit gas cleaning bag 10 is uitilized, which in turn enhances the efficiency of the smoke purification device.

Access openings, slots or the like denoted 13 arranged at an end of the exit gas chamber 12 opposite to the housing 1, and thus the furnace 2, for intake of the combustion air.

A valve 14 arranged above the access openings 13 for opening and/or closing off the emission of exit gases in case of power failure or in case a differential pressure measured across the exit gas cleaning bag 10 exceeds a predetermined threshold value.

An air bleeding device 15 arranged above the valve 14 for removal of the combustion gases through the exit gas cleaning bag 10.

A construction or device 6 for cleaning the exit gas cleaning bag 10 by shaking the exit gas filter bag 10 such as to shake off the filter cake or residual products deposited on the exit gas cleaning bag 10 during filtering of the exit gases when using the smoke purification device G according to the invention.

An access device 7, such as a valve or a connector, arranged on the housing 1 for opening and/or closing the housing 1 for residual or waste products.

A door, hatch or the like denoted 9 through which it is possible to remove residual products, the exit gas cleaning bag 10 or the like from the interior of the smoke purification device G.

It is noted that the exit gas chamber 12 and the exit gas cleaning bag 10 extend along a part of or the whole length of the smoke purification system G and thus the outflow pipe or chimney pipe of the furnace system.

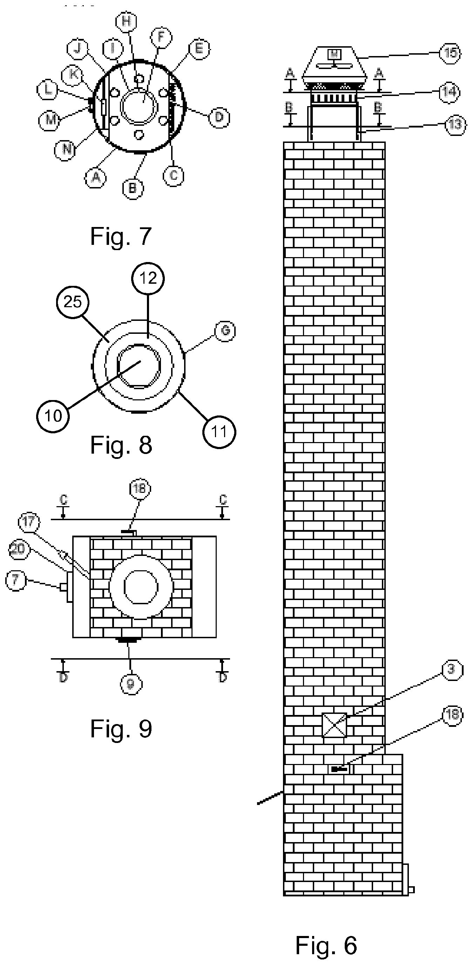

The smoke purification device G according to the invention generally works as follows. Combustion air is, by means of the ventilator or blower 4, drawn or sucked through the access openings 13 and the outer air chamber 25 (cf. Figs. 2 and 8, respectively) into the furnace 2 in which the combustion of fuel takes place. Exit gases are, by means of the air bleeding device 15, drawn or sucked into the exit gas chamber 12, and thereby through the exit gas cleaning bag 10 thus filtering the exit gases, and are expelled to the exterior through the valve 14 for opening and/or closing off the emission of exit gases. The air bleeding device 15 thus provides suction creating a pressure drop over the exit gas cleaning device 10 drawing the exit gases through the exit gas cleaning device 10.

As mentioned above the exit gas cleaning bag 10 may be cleaned by shaking the filter bag 10 by means of the construction or device 6 such as to shake off the filter cake or residual products deposited on the exit gas cleaning bag 10 over time. Alternatively or additionally the exit gas cleaning bag 10 may be removed and replaced through the door 9, through which the housing 1 may also be cleaned or emptied for residual products for safe disposal.

The first embodiment of a smoke purification device G shown in Figs. 1 to 3 further comprises the following optional elements, which may also be employed in other embodiments of the invention.

A control unit or panel 3 for electronically monitoring, controlling and/or operating the smoke purification device G. The control unit 3 may be connected to electrical equipment for controlling the smoke purification device G, such as a programmable logic controller (PLC), a programmable controller (PC) or the like.

A device, such as a motor, denoted 8 for producing a force urging residual products from the furnace 2 and the smoke purification device G towards the access device 7, such as a valve or connector, at which removal of the residual products for safe disposal may be performed, e.g. by suction exerted by a vacuum cleaner-like device.

An insulating cover or casing 11 made of an insulating material and being arranged enclosing at least a part of an outer piping A (Fig. 7) of the smoke purification system G.

A gas tight connection 5 arranged between the furnace 2 and the exit gas chamber 12 of the smoke purification device. The gas tight connection 5 may be variably arranged on the smoke purification device. It is noted that in other embodiments the gas tight connection 5 may be omitted and the furnace 2 be directly connected to the exit gas chamber 12 of the smoke purification device.

Turning now to Figs. 4 to 9, a second embodiment of a smoke purification device G mounted on an existing or new furnace system comprising a furnace 2 and an associated outflow pipe or chimney pipe is illustrated. In this embodiment, the furnace system is of the open fireplace type.

With reference to Fig. 4 a furnace system of the open fireplace type comprises a valve 18 for adjusting the flow of smoke and/or the fire in the fireplace, a fire grate 21, an area 22 for arranging fire wood or the like, an optional smoke deflector 23 for urging the smoke into the chimney, and a smoke wall 24. The smoke wall 24 may be insulated.

In one embodiment the furnace system of the open fireplace type may be adapted for burning biomass or wood pellets, in which case it comprises an area 16 for depositing the wood pellets as well as a pipe or duct 17 (Fig. 9) for connection to wood pellet equipment.

The smoke purification device shown in Figs. 4 to 9 will be described in the following with reference only to the features by which it differs from that of Figs. 1 to 3 and described above.

First of all, the smoke purification device shown in Figs. 4 to 9 does not comprise any of the features described as being optional above. In other embodiments of a smoke purification device for a furnace system of the open fireplace type, the smoke purification device may, however, comprise one or more of the features described as being optional above.

However, with particular reference to Fig. 4, the smoke purification device G shown in Figs. 4 to 9 comprises a door, hatch or the like denoted 20 arranged below the fire grate 21 through which it is possible to remove residual products and the like from the interior of the smoke purification device G.

With reference to Fig. 8, the smoke purification device G comprises, irrespective of the embodiment, an optional insulating cover 11, an outer piping A, which in the following is denoted "exit gas pipe A" or (cf. Fig. 7), an outer air chamber 25 for passage of combustion air, an exit gas chamber 12 for passage of exit gases and the exit gas cleaning bag 10, which is arranged in the exit gas chamber 12. Thereby exit gases flowing in the exit gas chamber 12 may be forced through the exit gas cleaning bag 10 by means of suction provided by the air bleeding device 15.

It is noted that in this embodiment the exit gas chamber 12 comprises no secondary chamber, and thus only one chamber. This construction of the exit gas chamber 12 is chosen as furnace systems of the open fireplace type are constructions with a high internal oxygen content. In this case the exit gases are therefore introduced in a longitudinal direction into the exit gas chamber and thus the exit gas cleaning bag 10, which is protected at the bottom. Thereby the whole length of the exit gas cleaning bag 10 is uitilized, which in turn enhances the efficiency of the smoke purification device.

Furthermore, with particular reference to Fig. 7, further details of the smoke purification device shown in Figs. 4 to 9 are illustrated. These further details may also be provided to the device according to the embodiment shown in Figs. 1 to 3 and described above.

As shown in Fig. 7, the exit gas cleaning bag 10 comprises a bead or edge H as well as an internal chamber F. The bead or edge H serves to provide for a secure connection between the exit gas cleaning bag 10 and an upper edge formed on an exit gas pipe A of the smoke purification system G G. Particularly, the connection is in the embodiment shown secured by means of a locking ring I, which may be made of a silicone rubber or a similar or like heat resistant and resilient material.

Furthermore, and still referring to Fig. 7, the smoke purification device shown in Figs. 4 to 9 comprises the following features:

An outer ring C adapted for, in one position thereof, closing off the openings 13.

A sealing or gasket B, such as a silicone gasket, arranged between the exit gas pipe A and the outer ring C.

A first spring element D adapted for pulling back the outer ring C such that the exit gases may pass from the exit gas chamber 12 to the exterior.

A partition wall E forming a partition between the first spring element D and the exit gas chamber 12.

At least one magnet valve K with a rod and a pressure meter for measuring the differential pressure over the exit gas cleaning bag (10). The at least one magnet valve K is, together with the first spring element D, adapted for effecting the opening and closing movement of the outer ring C in reaction to the measurements conducted by the pressure meter.

In this connection it is noted that in the embodiment according to figures 4 to 9 the first spring element D and the magnet valve K are provided externally on the smoke purification device. If a first spring element D and a magnet valve K would be provided on a smoke purificaion device according to Figs. 1 to 3, the first spring element D and the magnet valve K would, however, be provided internally on the smoke purification device.

A partition wall J between the at least one magnet valve K and the exit gas chamber 12.

A second spring element L adapted for pulling together the outer ring C such as to enable the outer ring C to contract and expand in reaction to changes in temperature.

At least one bolt and nut assembly M adapted for pulling together the outer ring C such as to enable the outer ring C to contract and expand in reaction to changes in temperature.

A bracket N on which the magnet valve K is mounted such that the outer ring C is movable with respect to the exit gas pipe A.

Furthermore, and irrespective of the embodiment the smoke purification device according to the invention may optionally be equipped with an auxiliary device or material adapted for removal of harmful gases such as dioxins.

The smoke purification device according to the invention may, irrespective of the embodiment, be provided as a part of a new furnace system or it may be provided separately for retrofitting to an existing furnace system.

In the following an example of a method for mounting a smoke purification device G according to the invention in a furnace system, whether new or existing, is described.

In a first step it is, particularly in case of retrofitting, necessary to remove any existing exit gas pipe insert(s) arranged in the outflow pipe or chimney of the furnace system. This may for instance be done by cutting or carving using a diamond drill or the like.

Alternatively or additionally it may be necessary to expand the interior space of the outflow pipe or chimney of the furnace system to provide space for the parts of the smoke purification device G to be mounted therein. This may for instance be done by cutting or carving using a diamond drill or the like.

Thereupon the parts of the smoke purification device G to be mounted in the interior space of the outflow pipe or chimney of the furnace system are arranged in the outflow pipe or chimney of the furnace system and is attached in a gas tight manner to the furnace 2 of the furnace system, e.g. by welding. Advantageously, one may in this connection start by arranging and attaching the exit gas chamber 12 in which the exit gas cleaning bag 10 is (to be) arranged and subsequently arranging and attaching the outer air chamber 25.

Next, the ventilator 4 and the corresponding connections are mounted.

Next, the exit gas cleaning bag 10 with its chamber F and, where present, locking ring I are mounted.

Then the construction 6 for cleaning the exit gas cleaning bag 10 is mounted.

Finally, first the exit gas valve 14 and then the air bleeding device 15 are mounted at the end of the exit gas chamber 12 opposite the furnace 2 of the furnace system. In this connection materials such as foam or silicone may be used to form a firm and durable attachment between these elements. Optionally intermediate layers or elements of a suitable material may also be inserted.

In additional and optional steps additional equipment such as electrical equipment for controlling the smoke purification device G and/or a device for removing harmful exit gases, such as dioxins, may be mounted.

It should be noted that the above description of preferred embodiments serves only as examples, and that a person skilled in the art will know that numerous variations are possible without deviating from the scope of the claims.

Particularly, the skilled person will readily realize that the various components and features of one of the embodiments described above may likewise find use in the other embodiment described above.

Furthermore, and irrespective of the embodiment the smoke purification device according to the invention may also be equipped with two or more exit gas cleaning device 10, which may be arranged in parallel or in series.

The person skilled in the art realizes that the present invention by no means is limited to the preferred embodiments described above. On the contrary, many modifications and variations are possible within the scope of the appended claims.

## Claims

1. A smoke purification device (G) adapted for use in connection with a furnace system, such as a wood burner, a wood burning stove, an open fireplace, a furnace, stove or heath for burning wood or a smaller furnace or boiler for burning biomass fuel or wood pellets, said furnace system comprising a furnace (2) and an outflow pipe, wherein the smoke purification device comprises:
an exit gas cleaning bag (10) arranged in an exit gas chamber (12) of the smoke purification device (G),
a construction (6) for cleaning the exit gas cleaning bag (10), a housing (1) for receiving residual or waste products, an access device (7) for opening and/or closing the housing (1) and a door or hatch (9) adapted for enabling removal of residual or waste products, the exit gas cleaning bag (10) and the like, all of which are adapted to be arranged at or in connection with the furnace (2), and
an air bleeding device (15) adapted for removing exit gases by suction through the exit gas cleaning bag (10), a valve (14) for opening or closing for the exit gases and a plurality of openings (13) for entry of combustion air through an outer air chamber (25) of the smoke purification device (G) to the furnace (2), the combustion air thereby getting preheated by the exit gas chamber (12) of the smoke purification device (G), the air bleeding device (15), the valve (14) and the plurality of openings (13) being arranged at an end of the exit gas chamber (12) opposite to the housing (1).

2. A smoke purification device according to claim 1, further comprising a ventilator or blower (4) adapted for regulating the amount of combustion air provided to the furnace (2).

3. A smoke purification device according to any one of the above claims, further comprising an outer piping (A) and a device for attaching the exit gas cleaning bag (10) to the outer piping (A) and/or for protecting the exit gas cleaning bag (10).

4. A smoke purification device according to any one of the above claims, further comprising a unit (8) adapted for producing a force urging residual products from the furnace (2) and the exit gas cleaning bag (10) to the access device (7).

5. A smoke purification device according to any one of the above claims, further comprising a gas tight connection (5) adapted to be arranged between the furnace (2) and the exit gas chamber (12) of the smoke purification device (G).

6. A smoke purification device according to any one of the above claims, further comprising an insulating cover or casing (11) made of an insulating material and being arranged enclosing at least a part of the smoke purification device (G).

7. A smoke purification device according to any one of the above claims, further comprising a first spring element (D) adapted for pulling back an outer ring (C) to enable the exit gases to pass from the exit gas chamber (12) of the smoke purification device (G) to the exterior.

8. A smoke purification device according to claim 7, further comprising at least one magnet valve (K) with a rod and a pressure meter for measuring the differential pressure over the exit gas cleaning bag (10), wherein the at least one magnet valve (K) is, together with the first spring element (D), adapted for effecting the opening and closing movement of the outer ring (C) in reaction to the measurements conducted by the pressure meter.

9. A smoke purification device according to claim 8, wherein the magnet valve (K) is mounted on a bracket (N) such that the outer ring (C) is movable with respect to the exit gas pipe (A) of the smoke purification device (G).

10. A smoke purification device according to any one of the above claims, further comprising at least one of a second spring element (L) adapted for pulling together an outer ring (C) such as to enable the outer ring (C) to contract and expand in reaction to changes in temperature and at least one bolt and nut assembly (M) adapted for pulling together the outer ring (C) such as to enable the outer ring (C) to contract and expand in reaction to changes in temperature.

11. A smoke purification device according to any one of the above claims, further comprising an electrical equipment, such as a programmable logic controller (PLC), a programmable controller (PC) or the like, adapted for controlling the smoke purification device (G) or a control unit or panel (3) for electronically monitoring, controlling and/or operating the smoke purification device (G).

12. A smoke purification device according to any one of the above claims, further comprising a device adapted for removal of harmful gases such as dioxins.

13. A smoke purification device according to any one of the above claims, wherein the exit gas cleaning bag (10) is arranged in a basket, net or the like and/or in that the exit gas cleaning bag (10) is a filter bag.

14. A smoke purification device according to any one of the above claims, wherein the exit gas chamber (12) comprises a secondary chamber (12'), and thus two chambers in total.

## Patentansprüche

1. Rauchreinigungsvorrichtung (G), die dazu eingerichtet ist in Verbindung mit einem Ofensystem, zum Beispiel einem Holzbrenner, einem Holzbrennofen, einer offenen Feuerstelle, einem Ofen zur Holzverbrennung oder einem kleineren Ofen, Herd oder Kaminofen oder Kessel zur Verbrennung von Biomassekraftstoff oder Holzpellets, verwendet zu werden, wobei das Ofensystem einen Ofen (2) und ein Ablaufrohr umfasst, wobei die Rauchreinigungsvorrichtung Folgendes umfasst:
einen Abgasreinigungsbeutel (10), der in einer Abgaskammer (12) der Rauchreinigungsvorrichtung (G) angeordnet ist,
eine Konstruktion (6) zur Reinigung des Abgasreinigungsbeutels (10), ein Gehäuse (1) zum Aufnehmen von Rest- oder Abfallprodukten, eine Zugangsvorrichtung (7) zum Öffnen und/oder Schließen des Gehäuses (1) und eine Tür oder Luke (9), die dazu eingerichtet ist, die Entnahme der Rest- oder Abfallprodukte, des Abgasreinigungsbeutels (10) usw. zuzulassen, die jeweils dazu eingerichtet sind, an oder in Verbindung mit dem Ofen (2) angeordnet zu sein, und
eine Entlüftungsvorrichtung (15), die dazu eingerichtet ist, Abgase durch Absaugen durch den Abgasreinigungsbeutel (10) zu entfernen, ein Ventil (14) zum Öffnen oder Schließen für die Abgase und mehrere Öffnungen (13) zum Einlassen der Verbrennungsluft durch eine äußere Luftkammer (25) der Rauchreinigungsvorrichtung (G) zum Ofen (2), wobei die Verbrennungsluft dadurch durch die Abgaskammer (12) der Rauchreinigungsvorrichtung (G) vorgeheizt wird, wobei die Entlüftungsvorrichtung (15), das Ventil (14) und die mehreren Öffnungen (13) an einem Ende der Abgaskammer (12) gegenüber dem Gehäuse (1) angeordnet sind.

2. Rauchreinigungsvorrichtung nach Anspruch 1, ferner einen Ventilator oder ein Gebläse (4) umfassend, das dazu eingerichtet ist, die Menge der dem Ofen (2) bereitgestellten Verbrennungsluft zu regulieren.

3. Rauchreinigungsvorrichtung nach einem der vorstehenden Ansprüche, ferner ein äußeres Rohr (A) und eine Vorrichtung zum Befestigen des Abgasreinigungsbeutels (10) am äußeren Rohr (A) und/oder zum Schützen des Abgasreinigungsbeutels (10) umfassend.

4. Rauchreinigungsvorrichtung nach einem der vorstehenden Ansprüche, ferner eine Einheit (8) umfassend, die dazu eingerichtet ist, eine Kraft zu erzeugen, um Restprodukte vom Ofen (2) und Abgasreinigungsbeutel (10) zur Zugangsvorrichtung (7) zu drücken.

5. Rauchreinigungsvorrichtung nach einem der vorstehenden Ansprüche, ferner einen gasdichten Anschluss (5) umfassend, der dazu eingerichtet ist, zwischen dem Ofen (2) und der Abgaskammer (12) der Rauchreinigungsvorrichtung (G) angeordnet zu sein.

6. Rauchreinigungsvorrichtung nach einem der vorstehenden Ansprüche, ferner eine isolierende Abdeckung oder Verkleidung (11) umfassend, die aus einem isolierenden Material besteht und so angeordnet ist, dass sie zumindest einen Teil der Rauchreinigungsvorrichtung (G) umschließt.

7. Rauchreinigungsvorrichtung nach einem der vorstehenden Ansprüche, ferner ein erstes Federelement (D) umfassend, das dazu eingerichtet ist, einen äußeren Ring (C) zurückzuziehen, um das Strömen der Abgase von der Abgaskammer (12) der Rauchreinigungsvorrichtung (G) nach außen zu ermöglichen.

8. Rauchreinigungsvorrichtung nach Anspruch 7, ferner mindestens ein Magnetventil (K) mit einem Stab und einem Druckmesser zum Messen des Differentialdrucks über dem Abgasreinigungsbeutel (10) umfassend, wobei das mindestens eine Magnetventil (K) zusammen mit dem ersten Federelement (D) dazu eingerichtet ist, die Öffnungs- und Schließbewegung des äußeren Rings (C) als Reaktion auf die vom Druckmesser durchgeführten Messungen zu bewirken.

9. Rauchreinigungsvorrichtung nach Anspruch 8, wobei das Magnetventil (K) auf einem Bügel (N) montiert ist, sodass der äußere Ring (C) in Bezug zum Abgasrohr (A) der Rauchreinigungsvorrichtung (G) beweglich ist.

10. Rauchreinigungsvorrichtung nach einem der vorstehenden Ansprüche, ferner ein zweites Federelement (L), das dazu eingerichtet ist, einen äußeren Ring (C) zusammenzudrücken, um zu ermöglichen, dass sich der äußere Ring (C) als Reaktion auf Temperaturveränderungen zusammenzieht oder ausdehnt, und/oder eine Bolzen-Mutter-Anordnung (M), die dazu eingerichtet ist, den äußeren Ring (C) zusammenzudrücken, um zu ermöglichen, dass sich der äußere Ring (C) als Reaktion auf Temperaturveränderungen zusammenzieht oder ausdehnt, umfassend.

11. Rauchreinigungsvorrichtung nach einem der vorstehenden Ansprüche, ferner eine elektrische Ausrüstung, zum Beispiel eine speicherprogrammierbare Steuerung (SPS), eine programmierbare Steuerung (PC) o. Ä., die dazu eingerichtet ist, die Rauchreinigungsvorrichtung (G) zu steuern, oder eine Steuereinheit oder Bedientafel (3), um die Rauchreinigungsvorrichtung (G) elektronisch zu überwachen, zu steuern und/oder zu bedienen, umfassend.

12. Rauchreinigungsvorrichtung nach einem der vorstehenden Ansprüche, ferner eine Vorrichtung umfassend, die dazu eingerichtet ist, schädliche Gase, wie Dioxine, zu entfernen.

13. Rauchreinigungsvorrichtung nach einem der vorstehenden Ansprüche, wobei der Abgasreinigungsbeutel (10) in einem Korb, Netz o. Ä. angeordnet ist und/oder der Abgasreinigungsbeutel (10) ein Filterbeutel ist.

14. Rauchreinigungsvorrichtung nach einem der vorstehenden Ansprüche, wobei die Abgaskammer (12) eine Sekundärkammer (12'), und somit insgesamt zwei Kammern, umfasst.

## Revendications

1. Dispositif d'épuration de fumée (G) adapté pour l'utilisation en association avec un système de fourneau, tel qu'un poêle à bois, une cuisinière à bois, une cheminée ouvert, un fourneau, une cuisinière ou un foyer pour brûler du bois ou un fourneau, ou une chaudière, plus petit pour brûler un biocombustible ou des pastilles de bois, ledit système de fourneau comprenant un fourneau (2) et un tuyau d'écoulement sortant, dans lequel le dispositif d'épuration de fumée comprend :
une manche de nettoyage de gaz de sortie (10) agencée dans une chambre de gaz de sortie (12) du dispositif d'épuration de fumée (G),
une construction (6) pour nettoyer la manche de nettoyage de gaz de sortie (10), un logement (1) pour recevoir des produits résiduels ou de déchets, un dispositif d'accès (7) pour ouvrir et/ou fermer le logement (1) et une porte ou trappe (9) adaptée pour permettre l'enlèvement de produits résiduels ou de déchets, de la manche de nettoyage de gaz de sortie (10) et analogues, dont tous sont adaptés pour être agencés au niveau du fourneau (2) ou en association avec ce dernier, et
un dispositif de purge d'air (15) adapté pour éliminer des gaz de sortie par aspiration à travers la manche de nettoyage de gaz de sortie (10), une soupape (14) pour s'ouvrir ou se fermer pour les gaz de sortie et une pluralité d'ouvertures (13) pour l'entrée d'air de combustion à travers une chambre d'air externe (25) du dispositif d'épuration de fumée (G) vers le fourneau (2), l'air de combustion étant ainsi préchauffé par la chambre de gaz de sortie (12) du dispositif d'épuration de fumée (G), le dispositif de purge d'air (15), la soupape (14) et la pluralité d'ouvertures (13) étant agencés à une extrémité de la chambre de gaz de sortie (12) opposée au logement (1).

2. Dispositif d'épuration de fumée selon la revendication 1, comprenant en outre un ventilateur ou une soufflante (4) adapté pour réguler la quantité d'air de combustion fournie au fourneau (2).

3. Dispositif d'épuration de fumée selon l'une quelconque des revendications précédentes, comprenant en outre une tuyauterie externe (A) et un dispositif pour attacher la manche de nettoyage de gaz de sortie (10) à la tuyauterie externe (A) et/ou pour protéger la manche de nettoyage de gaz de sortie (10).

4. Dispositif d'épuration de fumée selon l'une quelconque des revendications précédentes, comprenant en outre une unité (8) adaptée pour produire une force poussant des produits résiduels depuis le fourneau (2) et la manche de nettoyage de gaz de sortie (10) jusqu'au dispositif d'accès (7).

5. Dispositif d'épuration de fumée selon l'une quelconque des revendications précédentes, comprenant en outre un raccord étanche aux gaz (5) adapté pour être agencé entre le fourneau (2) et la chambre de gaz de sortie (12) du dispositif d'épuration de fumée (G).

6. Dispositif d'épuration de fumée selon l'une quelconque des revendications précédentes, comprenant en outre un couvercle ou tubage isolant (11) fait d'un matériau isolant et agencé entourant au moins une partie du dispositif d'épuration de fumée (G).

7. Dispositif d'épuration de fumée selon l'une quelconque des revendications précédentes, comprenant en outre un premier élément à ressort (D) adapté pour retirer une bague externe (C) pour permettre aux gaz de sortie de passer depuis la chambre de gaz de sortie (12) du dispositif d'épuration de fumée (G) jusqu'à l'extérieur.

8. Dispositif d'épuration de fumée selon la revendication 7, comprenant en outre au moins une soupape à aimant (K) avec une tige et un appareil de mesure de pression pour mesurer la pression différentielle sur la manche de nettoyage de gaz de sortie (10), dans lequel l'au moins une soupape à aimant (K) est, conjointement avec le premier élément à ressort (D), adaptée pour effectuer le mouvement d'ouverture et de fermeture de la bague externe (C) en réaction aux mesures réalisées par l'appareil de mesure de pression.

9. Dispositif d'épuration de fumée selon la revendication 8, dans lequel la soupape à aimant (K) est montée sur un support (N) de telle sorte que la bague externe (C) soit mobile par rapport au tuyau de gaz de sortie (A) du dispositif d'épuration de fumée (G).

10. Dispositif d'épuration de fumée selon l'une quelconque des revendications précédentes, comprenant en outre au moins un d'un second élément à ressort (L) adapté pour tirer ensemble une bague externe (C) afin de permettre à la bague externe (C) pour se contracter et se dilater en réaction à des changements de température et au moins un ensemble à boulon et écrou (M) adapté pour tirer ensemble la bague externe (C) afin de permettre à la bague externe (C) de se contracter et se dilater en réaction à des changements de température.

11. Dispositif d'épuration de fumée selon l'une quelconque des revendications précédentes, comprenant en outre un équipement électrique, tel qu'un automate programmable (PLC), une unité de commande programmable (PC) ou analogues, adapté pour commander le dispositif d'épuration de fumée (G) ou une unité ou un panneau de commande (3) pour électroniquement surveiller, commander et/ou actionner le dispositif d'épuration de fumée (G).

12. Dispositif d'épuration de fumée selon l'une quelconque des revendications précédentes, comprenant en outre un dispositif adapté pour l'élimination de gaz nocifs tels que des dioxines.

13. Dispositif d'épuration de fumée selon l'une quelconque des revendications précédentes, dans lequel la manche de nettoyage de gaz de sortie (10) est agencée dans un panier, filet ou analogues et/ou en ce que la manche de nettoyage de gaz de sortie (10) est une manche de filtre.

14. Dispositif d'épuration de fumée selon l'une quelconque des revendications précédentes, dans lequel la chambre de gaz de sortie (12) comprend une chambre secondaire (12'), et ainsi deux chambres au total.
